# EUROPEAN PATENT SPECIFICATION

(11) **EP 2 070 755 B1**
(45) Date of publication and mention of the grant of the patent: **01.02.2012**
(21) Application number: 07122854.8
(22) Date of filing: 11.12.2007
(51) Int. Cl.: B60K 5/00, F16B 43/02

(54) **Engine mounting assembly and method for fastening an engine to a vehicle body**
Motorlageranordnung und Verfahren zur Befestigung eines Motors an einem Fahrzeugaufbau
Ensemble de montage de moteur et procédé de fixation d'un moteur sur la carrosserie du véhicule

(43) Date of publication of application: 17.06.2009
(73) Proprietor: Volvo Car Corporation, 405 31 Göteborg (SE)
(72) Inventor: Stoddart, Tom, 411 34, Göteborg (SE)
(74) Representative: Mossmark, Anders Lennart

(56) References cited:
- DE-A1- 10 008 297
- US-A- 4 231 281
- US-A- 4 266 630

## Description

### TECHNICAL FIELD

The present invention relates to an engine mounting assembly for fastening an engine to a vehicle body, said engine mounting assembly comprising a vehicle body, a subframe to which said engine is fastened and at least one fastener extending through at least a section of said subframe and/or said vehicle body for connecting said subframe and vehicle body. The invention also relates to a method for fastening an engine to a vehicle body.

### BACKGROUND ART

A vehicle engine is usually fastened to the main frame of a vehicle body by means of an intermediate member, herein referred to as a subframe. The engine is thus fastened to the subframe, which in turn is fastened to the main frame by means of fasteners, such as bolts or screws, inserted through holes or apertures in the subframe and the vehicle body. However, since a perfect overlap between a hole in the subframe and a corresponding hole in the main frame cannot be guaranteed, it is well-established practice to oversize one of said holes; usually the hole in the subframe. A consequence of this is that there exists a clearance between the fastener and the inner surface of the oversized hole. Therefore, to prevent the subframe from moving relative the vehicle body when the engine exerts a force on said subframe, for example following a gear shift, a large torque is applied to the fastener, so that the subframe is fixedly clamped between the vehicle body and the head of the fastener. A fastener is known, for example, by DE 10008297 A1.

A drawback of this method is that the fastener must be dimensioned to withstand large torques, which makes it heavy, expensive and bulky.

A first object of the invention is to provide an engine mounting assembly for fastening an engine to a vehicle body, which engine mounting assembly comprises fasteners, which are lighter, cheaper and less bulky in comparison with prior art fasteners. A second object of the invention is to provide a method for fastening an engine to a vehicle body using such fasteners.

### SUMMARY OF THE INVENTION

The first object is achieved with an engine mounting assembly according to claim 1. Said engine mounting assembly comprises a vehicle body, a subframe to which said engine is fastened and at least one fastener extending through at least a section of said subframe and/or said vehicle body for connecting said subframe and vehicle body. Said engine mounting assembly further comprises at least one washer extending in a first plane and having a radius that increases from a minimum to a maximum value around at least a part of its periphery and a through hole for receiving said fastener, said washer being arranged to be fixed against rotation on said fastener in a position in which it cooperates with a stop surface, for restricting movement of the subframe relative the vehicle body in a first direction in parallel with the first plane of the washer (1).

The members connected by said fastener are provided with holes or apertures for said fastener, and at least one of said holes is oversized to accommodate assembly tolerances. The member provided with an oversized hole is the member provided with a stop surface. The washer thus forms a link between said member and the fastener and any movement of said member in the first direction will result in a force transmitted to the fastener via the washer as a shear force. Thus, the member is no longer held in place by clamping only, and the torque applied to said fastener can be reduced in comparison with prior art assemblies, which renders possible the use of fasteners with smaller dimensions, which are lighter, cheaper and less bulky in comparison with prior art fasteners.

The washer may have the shape of a spiral with a through hole located in the centre of said spiral. The advantage of this embodiment is that the moment arm of the force acting on the washer to unscrew the fastener when the stop surface is forced against the washer is reduced.

The washer is advantageously arranged to be rotated by friction between said fastener and said washer, for example by means of a friction coupling. This solution simplifies the mounting procedure, as the washer will move with the fastener when the fastener is rotated in the holes in the subframe and/or vehicle body. Once the washer has come into contact with the stop surface, it cannot be rotated any further. However, the fastener can still be driven further into the holes in the subframe and/or vehicle body. Alternatively, the washer is rotated by friction between the washer and a nut mounted on the fastener.

The location of the stop surface depends on how the subframe is fastened to the vehicle body. The stop surface is advantageously located on the subframe, which is directly exposed to the forces caused by the engine. In these embodiments, the fastener is advantageously secured in the hole in the vehicle body by means of a weld nut welded to the vehicle body. The subframe is thus fixed relative the vehicle body in said first direction. The fastener can also be secured in the hole in the vehicle body by clamping or by means of a second washer acting on a stop surface located on the vehicle body. Another advantage with oversizing the hole in the subframe is that this facilitates the assembly process, as the subframe is easier to adjust than the vehicle body.

If a bushing is present in the hole in the subframe, then the bushing is advantageously provided with an oversized hole to accommodate assembly tolerances. In this embodiment, the stop surface is located on the static part of said bushing, so that the subframe is moveable relative said static part. The static part can for example be a rigid, inner sleeve.

However, the subframe can also be located between opposing flanges of a vehicle body. In this embodiment, it is advantageous if the holes through said flanges are oversized and the stop surface located on a first of said flanges. A second washer may be provided at the end of the fastener opposite to said first washer, cooperating with a stop surface located on said second flange to restrict movement of the subframe relative the vehicle body in said first or a second direction. Alternatively, the fastener can be secured to the second flange by clamping or by means of a weld nut attached to the vehicle body. To prevent the subframe from moving relative the fastener, the hole through the subframe is advantageously sized to provide a tight fit between the subframe and the fastener. Of course, if a bushing is arranged in the hole in the subframe, then the hole through the bushing should be sized to provide the tight fit.

It is also advantageous if at least one locking member is provided to restrict movement of said washer before said fastener is inserted through said washer. The locking member(s) is located on the subframe, the inner sleeve or the vehicle body and may for example form a cage.

The skilled person realizes that said subframe and vehicle body may be connected by two or more fasteners, each having at least one washer mounted thereon, said washers being arranged to be fixed against rotation in a position, in which they cooperate with a respective stop surface, for restricting movement of the subframe relative the vehicle body in at least a first direction. The force caused by the engine is thus distributed between several fasteners, which allows for a further reduction of the fastener dimensions. Also, by arranging the stop surfaces so that they face different directions, the movement of the subframe can be restricted in more directions than one.

The second object is achieved with a method according to claim 11. Said method comprises the steps of inserting a fastener through a washer, said washer extending in a first plane and having a radius that increases from a minimum to a maximum value around at least a part of its periphery and a through hole for receiving said fastener, inserting said fastener through a section of a subframe, to which said engine is fastened, and/or a vehicle body, for connecting said subframe and vehicle body, and rotating said washer into a position in which said washer cooperates with a stop surface, for restricting movement of the subframe relative the vehicle body in a first direction in parallel with the first plane of the washer (1).

As mentioned above, this method makes it possible to reduce the dimensions of a fastener arranged for fastening a subframe to a vehicle body.

As also mentioned above, it is advantageous if the at least one washer is rotated through rotation of said fastener by friction between said fastener and said washer, or through rotation of a nut mounted on said fastener by friction between said nut and said washer.

### BRIEF DESCRIPTION OF THE DRAWINGS

The present invention will now be described in further detail with reference to the drawings, on which:
Fig. 1 shows a perspective view over a washer according to the invention;
Fig. 2a shows a perspective view over an engine mounting assembly according to a first embodiment of the invention, wherein the washer is in an open position;
Fig. 2b shows a perspective view over the engine mounting assembly in Fig. 2a, wherein the washer is in a locked position;
Fig 3 shows a cross-section through an engine mounting assembly according to a second embodiment of the invention;
Fig. 4 shows a cross-section through an engine mounting assembly according to a third embodiment of the invention;
Fig. 5 shows a cross-section through an engine mounting assembly according to a fourth embodiment of the invention; and
Fig. 6 shows a perspective view over an engine mounting assembly according to a fifth embodiment of the invention.

### DETAILED DESCRIPTION

As used herein, the term fastening refers to the attachment of a first member to a second member, either directly or via an intermediate member. A fastened member is not necessarily rigidly fixed to the other member, but can have some freedom of movement.

An engine mounting assembly according to the invention comprises at least a subframe to which an engine is fastened, a vehicle body, a fastener connecting said subframe and vehicle body and a washer mounted on said fastener.

A subframe is an intermediate member, which is used as support for the engine instead of having the engine directly connected to the main body structure.

A fastener is a device adapted to fasten a subframe to a vehicle body. The fastener comprises a shaft, arranged to be inserted into a hole or aperture in at least one of the subframe and the vehicle body. The fastener can, for example, be a screw or a bolt. However, it can also be integral with either the subframe or the vehicle body.

A washer is an object arranged to be mounted on a fastener to form a link between said fastener and a member through which the fastener extends. A washer according to the invention has a radius in a first plane that increases from a minimum to maximum value along at least a part of the washer's periphery. The washer has a first side and a second side, connected by a perimeter surface. A through hole arranged to receive the fastener extends from the first to the second side. The skilled person realizes that the washer may have any suitable shape that fulfils the above criterions; the washer may for example have an oval shape with an off-centre through hole.

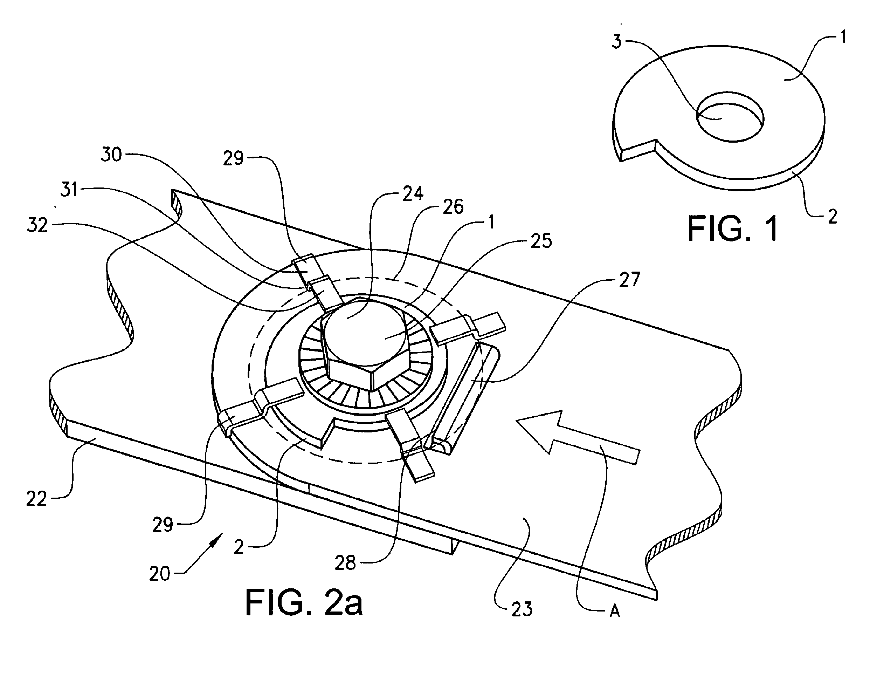

A particularly advantageous shape is shown in Fig. 1, where a flat washer 1 forms a spiral in said first plane, that is, the radius increases from a minimum to a maximum value along the entire periphery, and the through hole 3 is located in the centre of said spiral. This shape is particularly advantageous in that it minimizes the moment arm of a force acting on the perimeter surface 2, and thus the risk that the fastener on which the washer 1 is mounted will unscrew.

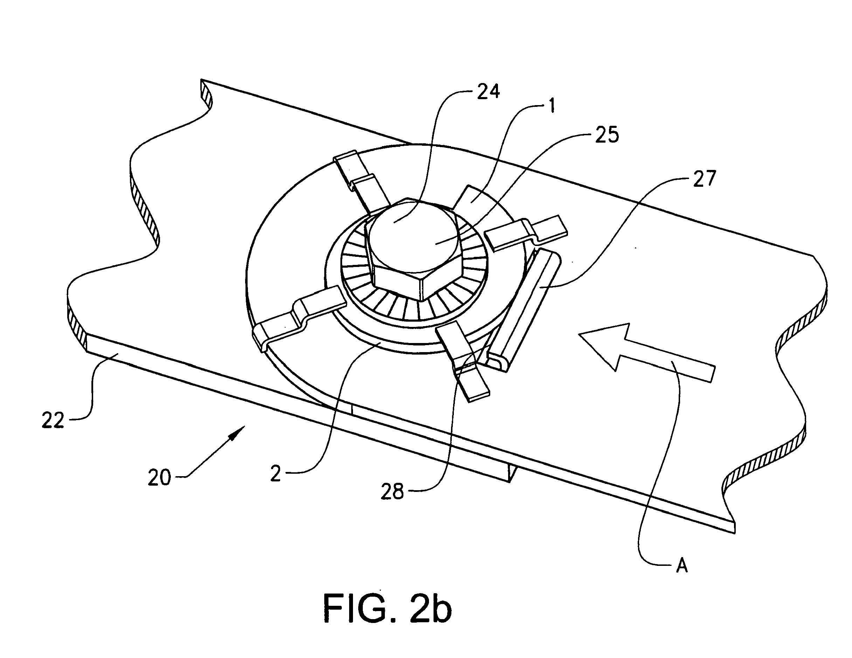

The function of the washer will now be explained, with reference to Fig. 2a and b.

Fig. 2a shows an engine mounting assembly 20 according to a first embodiment of the invention, comprising a vehicle body 22 and a subframe 23, connected by means of a fastener 24 in the form of a screw. The screw 24 comprises a shaft (not shown) extending through holes in the subframe 23 and vehicle body 22, which shaft at one end is provided with a screw head 25 and at the other with threads arranged to cooperate with a nut, such as a weld nut attached to the vehicle body 22, or threads on the inner surface of the hole through the vehicle body 22. A washer 1 as shown in Fig. 1 is mounted on the shaft, between the screw head 25 and the subframe 23. A stop member 27 having a stop surface 28 facing the hole in the subframe 23 is punched out in the subframe 23. The subframe 23 is further provided with four locking members 29, each comprising a first portion 30 attached to the subframe 23, a second or intermediate portion 31, extending essentially perpendicular to said first portion 30 in a direction away from said subframe 23, and a third portion 32, extending essentially perpendicular to said intermediate portion 31 in a direction away from said first portion 30, so that a clearance is created for the washer 1 between the locking member 29 and the subframe 23. The locking members 29 are located on a circle 26 (indicated by a dashed line) at such a distance from the centre of the hole in the subframe 23, that the washer 1, although secured on the subframe 23 by the cage formed by the locking members 29, is allowed to rotate on the subframe 23 around a centre axis extending through the centre of the through hole 3 in the washer 1. The washer 1 in Fig. 2a is in an open position, which means that the perimeter surface 2 of the washer 6 is not yet in contact with the stop surface 28 on the stop member 27. The subframe 23 is therefore moveable in a first direction indicated by arrow A.

Although the washer 1 can be manually rotated, it is advantageously rotated by friction between the screw 24 and the washer 1. Thus, when the screw 24 is rotated in the hole in the subframe 23, the washer 1 is rotated into its locking position (fig. 2b), in which the perimeter surface 2 abuts against the stop surface 28. The subframe 23 is now prevented from moving in the first direction indicated by arrow A. Any such attempt will result in a force transmitted via the washer 1 to the screw 24 in the form of a shear force. Note also that although the stop member 27 prevents the washer 1 from being rotated any further, the screw 24 can still be driven further into the holes in the subframe 23 and vehicle body 22.

Obviously, the stop member 27 restricts movement of the subframe 23 only in the first direction indicated by arrow A. However, the peak loads, generated by the engine fastened to the subframe 23, for example following a gear shift, are in most cases directed in the same direction. By locating the stop member 27 so that the first direction, indicated by arrow A, coincides with the direction of said peak loads, it is ensured that the peak loads are transmitted to the screw 24 in the form of shear forces. This allows for a reduction of the torque applied to the screw 24, and consequently the screw dimensions, even if clamping of the subframe 23 is still required to prevent it from moving in other directions.

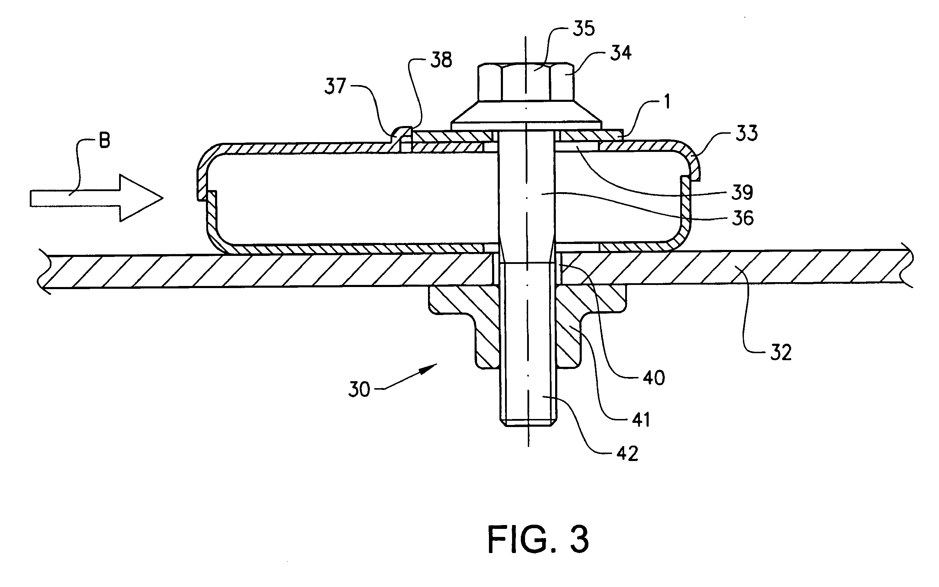

Fig. 3 shows a cross-section through an engine mounting assembly 30 according to a second embodiment of the invention. The engine mounting assembly 30 comprises a subframe 33 and a vehicle body 32, fastened to each other by means of a fastener 34 in the form of a screw. The screw 34 comprises an elongated shaft 36 extending through holes 39, 40 in the subframe 33 and vehicle body 32. The shaft 36 is at one end provided with a head 35, located adjacent to the side of the subframe 33 facing away from the vehicle body 32, and at the opposite end with a threaded portion 42 arranged to cooperate with a weld nut 41 welded to the vehicle body 32 for tightening of the screw 34.

The hole 39 in the subframe 33 is oversized to accommodate assembly tolerances, that is, the diameter of the hole 39 in the subframe 33 is much larger than the diameter of the shaft 36, so that there is a clearance between the shaft 36 and the inside of the hole 39. Thus, the screw 34 can still be inserted into the holes 39, 40 in the subframe 33 and vehicle body 32, even if the subframe 33 is somewhat displaced relative the vehicle body 32 during the assembly process.

A washer 1 as shown in Fig. 1 is located between the screw head 35 and the subframe 33. The washer 1 is in its locked position, in which it abuts against a stop surface 38 on a stop member 37 punched out in the subframe 33. At the opposite end of the screw 34, the weld nut 41 is welded to the vehicle body 32, so that the screw 34 extending through said weld nut 41 is fixedly secured to the vehicle body 32. Consequently, the subframe 33 is prevented from moving relative the vehicle body 32 in the direction indicated by arrow B. Any such attempt will result in a shear force transmitted to the screw 34 via the washer 1.

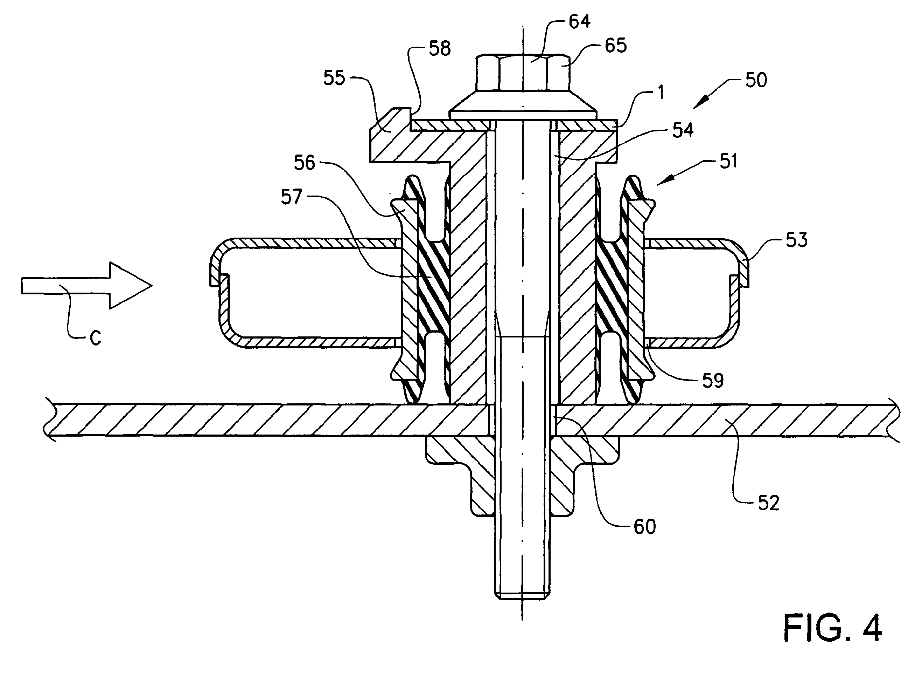

Fig. 4 shows a third embodiment of an engine mounting assembly 50 according to the invention, comprising a subframe 53 and a vehicle body 52, connected by means of a screw 64 extending through holes 59, 60 in the subframe 53 and vehicle body 52. A bushing 51 is arranged in the hole 59 in the subframe 53, provided to absorb movement of the subframe 53 in the plane of the subframe 53. The bushing 51 comprises a static part 55 in the form of an inner sleeve and a dynamic part, comprising an outer sleeve 56 surrounding said inner sleeve 55 and a resilient element 57 connecting said inner and outer sleeves 56, 57. The screw 64 extends through a through hole 54 in the inner sleeve 55, which through hole 54 is oversized to accommodate assembly tolerances. A washer 1 mounted on the screw 64 between the head 65 of the screw 64 and the inner sleeve 55 cooperates with a stop surface 58 located on said inner sleeve 55, to fix the inner sleeve 55 relative the screw 64 in the direction indicated by arrow C. Movement of the subframe 53 relative the vehicle body 52 is thus restricted, although the dynamic part of the bushing 51 allows the subframe 53 some freedom of movement.

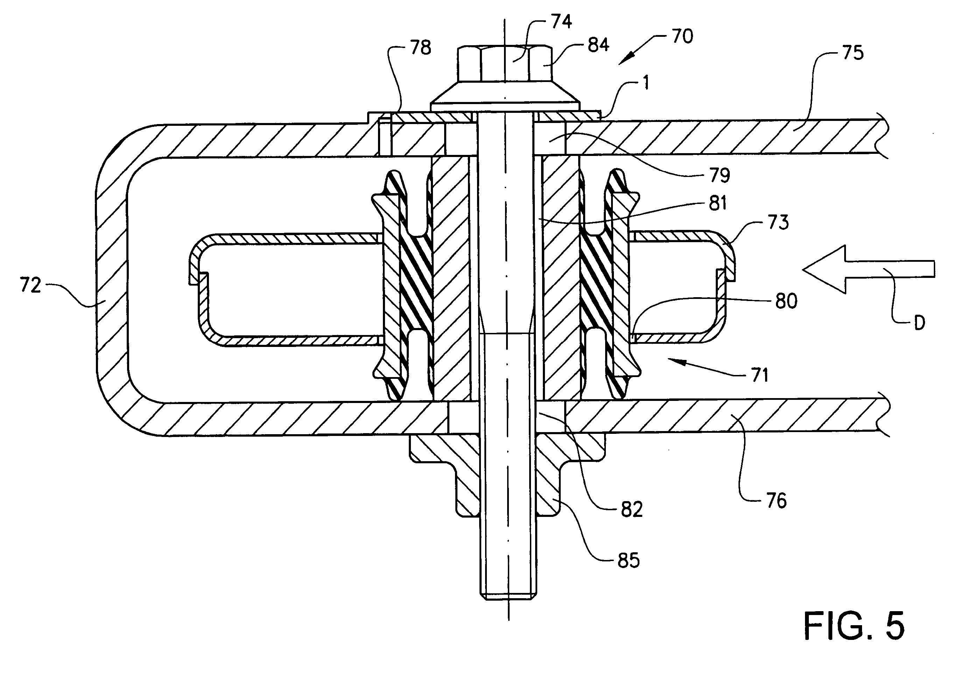

Fig. 5 shows an engine mounting assembly 70 wherein a subframe 73 is located between a first and a second flange 75, 76 of a vehicle body 72. A bushing 71 is arranged in a hole 80 in the subframe 73, and a fastener 74 in the form of a screw extends through holes 79, 80, 81, 82 in the first flange 75, the subframe 73, the bushing 71 and the second flange 76, for fastening the subframe 73 to the vehicle body 72. The holes 79, 82 in the flanges 75, 76 are oversized to accommodate assembly tolerances, and a washer 1, arranged to cooperate with a stop surface 78 located on the first flange 75, is therefore mounted on the screw 74 between a screw head 84 and the first flange 75, to prevent the fastener 74 from moving relative the vehicle body 72 in the direction indicated by arrow D. For the same reason, the screw 74 extends through a weld nut 85, attached to the second flange 76, at the opposite end of the screw 74. Furthermore, the hole 81 through the bushing 71 is sized to provide a relatively tight fit between the screw 74 and an inner sleeve of said bushing 71. Consequently, movement of the subframe 73 relative the vehicle body 72 is restricted in the first direction indicated by arrow D.

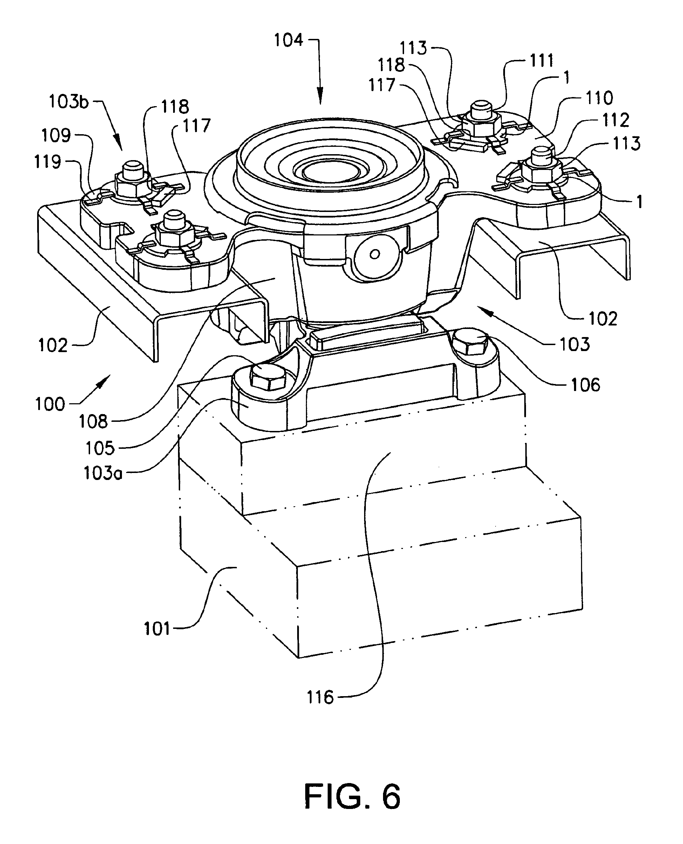

Fig. 6 shows how an engine mounting assembly 100 according to the invention can be used for fastening an engine 101 to a vehicle body 102.

Observe that some features have been removed from the drawing for the sake of clarity.

The engine 101, indicated schematically by dashed lines, is via gearbox 116, also indicated by dashed lines, fastened to a lower part 103a of a subframe 103 by means of two bolts 105, 106, located at opposite ends of said lower part 103a, as seen in the transverse direction of the engine mounting assembly 100. Said lower part 103a is also connected to a dynamic part of an engine cushion 104, arranged to absorb engine vibrations and movements. The engine cushion 104 comprises said dynamic part, located in the centre of said engine cushion, and a static part surrounding said dynamic part. Such engine cushions 104 are known to the skilled person and need not be explained in detail herein. The static part of the engine cushion 104. is attached to an upper part 103b of said subframe 103, which upper part 103b comprises a main body 108, attached to the static part of the engine cushion 104, and two flanges 109, 100 attached to opposite sides of said main body 108 and extending away from the main body 108 in the transverse direction of the engine mounting assembly 100. Each flange 109, 110 is at its distal end provided with two through holes, and two fasteners 111, 112 in the form of threaded shafts, integral with said vehicle body 102, extend through said through holes. The flanges 109, 110 are secured on said shafts 111, 112 by nuts 113. The holes in the flanges 109, 110 are oversized to accommodate assembly tolerances, that is, to make sure that the shafts 111, 112 will penetrate said holes even if the subframe 103 is somewhat displaced during the assembly process. Washers 1 are provided on the shafts 111, 112, located between the nuts 113 and the flanges 109, 100. Said washers 1 are rotated through rotation of the nuts 113, by friction between the nuts 113 and the washers 1, from an open position into a locking position, in which they cooperate with a respective stop surface 118 located on a stop member 117, which is integral with the subframe 103. The stop surfaces 118 face different directions, so that the upper part 103b of the subframe 103 is rigidly secured to the vehicle body 102 in several directions. The washers 1 are secured on the subframe by locking members 119, as shown in Fig. 2a and b.

Although the engine cushion 104 is arranged to absorb engine vibrations or movements, some forces will be transferred via the engine cushion 104 to the upper part 103b of the subframe 103. The washers 1 are mounted on the shafts 111, 112 to prevent these forces from causing the upper part 103b of the subframe 103 to move relative the vehicle body 102.

Although no bushings are shown on in Fig. 6, the skilled person realizes that bushings can be arranged in the holes in the flanges 109, 110, in which case the stop surfaces are located on the static part of said bushings.

Although only some of the above described embodiments comprise locking members, the skilled person realizes that locking members can be used in all assemblies according to the invention and that said locking members can have any suitable shape and not just the one shown in Fig. 2a and 6. The skilled person also realizes that any number of locking members, or none, can be used and that they can be arranged in many different ways. The four locking members shown in Fig. 2a can for example be replaced by two locking members, wherein each locking member is attached to the subframe at opposite sides of the washer, so that they extend across a part of the washer and thus secure the washer on the subframe.

It is understood that a stop member can be integral with the subframe, bushing or vehicle body, but also attached thereto by welding, mechanical fastening, adhesion or the like. A stop member may for example be punched out in the subframe, or a shoulder integral with or attached to said subframe. A stop surface "located on" a member is either located on a stop member integral with said member or on a stop member attached to said member.

Similarly, a locking member can be attached to the subframe, bushing or vehicle body by welding, mechanical fastening, adhesion or the like. However, it can also form an integral part of any of these.

In most of the above embodiments, the washer is mounted on the fastener between the fastener head and an adjacent member, e.g. the subframe. However, the washer can also, as shown in Fig. 6, be located between a nut arranged on said fastener and the adjacent member, in which case the washer advantageously is rotated by friction between the washer and the nut. The skilled person also realizes that the weld nut shown in the figures can be replaced by any kind of nut or fastening means suitable for securing the fastener in the hole in the vehicle body, e.g. by clamping.

It is also possible to provide a second washer at the opposite end of a fastener relative a first washer, which second washer cooperates with a stop surface for restricting movement of the subframe relative the vehicle body. The first and second washer either restrict movement of the subframe relative the vehicle body in the same direction or in different directions.

Finally, the invention is not limited to the above embodiments, and washers of the above described type may be used in any kind of engine mounting, wherein an engine is fastened to a vehicle body via an intermediate subframe.

## Claims

1. Engine mounting assembly (20; 30; 50; 70; 100) for fastening an engine (101) to a vehicle body (22; 32; 52; 72; 102), said engine mounting assembly (20; 30; 50; 70; 100) comprising:
- a vehicle body (22; 32; 52; 72; 102);
- a subframe (23; 33; 53; 73; 103) to which said engine (101) is fastened; and
- at least one fastener (24; 34; 64; 74; 111, 112) extending through at least a section of said subframe (23; 33; 53; 73; 103) and/or said vehicle body (22; 32; 52; 72; 102) for connecting said subframe (23; 33; 53; 73; 103) and vehicle body (22; 32; 52; 72; 102); **characterized in that** said engine mounting assembly (20; 30; 50; 70; 100) further comprises:
at least one washer (1) extending in a first plane and having a radius that increases from a minimum to a maximum value around at least a part of its periphery and a through hole (3) for receiving said fastener (24; 34; 64; 74; 111, 112), said washer (1) being arranged to be fixed against rotation on said fastener (24; 34; 64; 74; 111, 112) in a position in which it cooperates with a stop surface (28; 38; 58; 78; 118), for restricting movement of said subframe (23; 33; 53; 73; 103) relative said vehicle body (22; 32; 52; 72; 102) in a first direction in parallel with the first plane of the washer (1).

2. Engine mounting assembly (20; 30; 50; 70; 100) according to claim 1, wherein said washer (1) has the shape of a spiral and said through hole (3) is located in the centre of said spiral.

3. Engine mounting assembly (20; 30; 50; 70) according to claim 1 or 2, wherein said washer (1) is arranged to be rotated by friction between said fastener (24; 34; 64; 74) and said washer (1).

4. Engine mounting assembly (100) according to claim 1 or 2, wherein a nut (113) is mounted on said fastener (111, 112) and said washer (1) is arranged to be rotated by friction between said nut (113) and said washer (1).

5. Engine mounting assembly (20; 30; 100) according to any of the preceding claims, wherein said stop surface (28; 38; 118) is located on said subframe (23; 33; 103).

6. Engine mounting assembly (70) according to any of claim 1-4, wherein said subframe (73) is located between opposing flanges (75, 76) of a vehicle body (72) and said stop surface (78) is located on said vehicle body (72).

7. Engine mounting assembly (50) according to any of claim 1-4, wherein said fastener (64) extends through a bushing (51) in said subframe (53) and said washer (1) is arranged to cooperate with a stop surface (58) located on a static part (55) of said bushing (51).

8. Engine mounting assembly (20; 100) according to any of the preceding claims, comprising at least one locking member (29; 119) arranged to restrict movement of said washer (1) before said fastener (24; 111, 112) is inserted through said washer (1).

9. Engine mounting (100) assembly according to any of the preceding claims, wherein said subframe (103) and vehicle body (102) are connected by at least two fasteners (111, 112), each having at least one washer (1) mounted thereon, said washers (1) being arranged to be fixed against rotation in a position, in which they cooperate with a respective stop surface (118), for restricting movement of said subframe (103) relative said vehicle body (102) in at least a first direction.

10. Engine mounting assembly (100) according to claim 9, wherein said stop surfaces (118) face different directions for restricting movement of said subframe (103) relative said vehicle body (102) in at least two different directions.

11. Method for fastening an engine (101) to a vehicle body (22; 32; 52; 72; 102), comprising the steps of:
inserting a fastener (24; 34; 64; 74; 111, 112) through a washer (1), said washer (1) extending in a first plane and having a radius that increases from a minimum to a maximum value around at least a part of its periphery and a through hole (3) for receiving said fastener (24; 34; 64; 74; 111, 112),
inserting said fastener (24; 34; 64; 74; 111, 112) through a section of a subframe (23; 33; 53; 73; 103), to which said engine is fastened, and/or a vehicle body (22; 32; 52; 72; 102), for connecting said subframe (23; 33; 53; 73; 103) and vehicle body (22; 32; 52; 72; 102); and
rotating said washer (1) into a position in which said washer (1) cooperates with a stop surface (28; 38; 58; 78; 118), for restricting movement of said subframe (23; 33; 53; 73; 103) relative said vehicle body (22; 32; 52; 72; 102) in a first direction in parallel with the first plane of the washer (1).

12. Method according to claim 11, wherein said washer (1) is rotated through rotation of said fastener (24; 34; 64; 74) by friction between said fastener (24; 34; 64; 74) and said washer (1).

13. Method according to claim 11, wherein a nut (113) is mounted on said fastener (111, 112) and said washer (1) is rotated through rotation of said nut (113) by friction between said nut (113) and said washer (1).

## Patentansprüche

1. Motorlageranordnung (20; 30; 50; 70; 100) zur Befestigung eines Motors (101) an einem Fahrzeugaufbau (22; 32; 52; 72; 102), welche Motorlageranordnung (20; 30; 50; 70; 100) folgendes umfasst:
einen Fahrzeugaufbau (22; 32; 52; 72; 102);
einen Unterrahmen (23; 33; 53; 73; 103), an dem der Motor (101) befestigt ist; und
mindestens ein Befestigungselement (24; 34; 64; 74; 111, 112), das sich durch mindestens einen Teil des Unterrahmens (23; 33; 53; 73; 103) und/oder des Fahrzeugaufbaus (22; 32; 52; 72; 102) zum Verbinden des Unterrahmens (23; 33; 53; 73; 103) mit dem Fahrzeugaufbau (22; 32; 52; 72; 102) erstreckt;
**dadurch gekennzeichnet, dass** die Motorlageranordnung (20; 30; 50; 70; 100) weiter folgendes umfasst:
mindestens eine Unterlegscheibe (1), die sich in einer ersten Ebene erstreckt und einen Radius, der von einem Minimumwert zu einem Maximumwert um mindestens einen Teil des Umkreises herum ansteigt, und ein Durchgangsloch (3) zur Aufnahme des Befestigungselements (24; 34; 64; 74; 111, 112) aufweist, wobei die Unterlegscheibe (1) dafür eingerichtet ist, gegen Rotation am Befestigungsmittel (24; 34; 64; 74; 111, 112) in einer Position befestigt zu werden, wo sie mit einer Anschlagsfläche (28; 38; 58; 78; 118) zusammenwirkt, um Bewegung des Unterrahmens (23; 33; 53; 73; 103) relativ zum Fahrzeugaufbau (22; 32; 52; 72; 102) in einer ersten Richtung parallel zur ersten Ebene der Unterlegscheibe (1) zu begrenzen.

2. Motorlageranordnung (20; 30; 50; 70; 100) nach Anspruch 1, wobei die Unterlegscheibe (1) die Form einer Spirale hat, und das Durchgangsloch (3) in der Mitte der Spirale angeordnet ist.

3. Motorlageranordnung (20; 30; 50; 70) nach Anspruch 1 oder 2, wobei die Unterlegscheibe (1) dafür eingerichtet ist, durch Reibung zwischen dem Befestigungsmittel (24; 34; 64; 74) und der Unterlegscheibe (1) gedreht zu werden.

4. Motorlageranordnung (100) nach Anspruch 1 oder 2, wobei eine Mutter (113) auf dem Befestigungselement (111, 112) angebracht ist, und die Unterlegscheibe (1) dafür eingerichtet ist, durch Reibung zwischen der Mutter (113) und der Unterlegscheibe (1) gedreht zu werden.

5. Motorlageranordnung (20; 30; 100) nach irgendeinem der vorhergehenden Ansprüche, wobei die Anschlagsfläche (28; 38; 118) auf dem Unterrahmen (23; 33; 103) angebracht ist.

6. Motorlageranordnung (70) nach irgendeinem der Ansprüche 1-4, wobei der Unterrahmen (73) zwischen gegenüberliegenden Flanschen (75, 76) eines Fahrzeugaufbaus (72) angebracht ist, und die Anschlagsfläche (78) auf dem Fahrzeugaufbau (72) angebracht ist.

7. Motorlageranordnung (50) nach irgendeinem der Ansprüche 1-4, wobei sich das Befestigungsmittel (64) durch eine Buchse (51) im Unterrahmen (53) erstreckt, und die Unterlegscheibe (1) dafür eingerichtet ist, mit einer Anschlagsfläche (58) zusammenzuwirken, die auf einem statischen Teil (55) der Buchse (51) angeordnet ist.

8. Motorlageranordnung (20; 100) nach irgendeinem der vorhergehenden Ansprüche, umfassend mindestens ein Verriegelungselement (29; 119), das dafür eingerichtet ist, Bewegung der Unterlegscheibe (1) zu begrenzen, ehe das Befestigungselement (24; 111, 112) durch die Unterlegscheibe (1) eingeführt wird.

9. Motorlageranordnung (100) nach irgendeinem der vorhergehenden Ansprüche, wobei der Unterrahmen (103) und Fahrzeugaufbau (102) durch mindestens zwei Befestigungsmittel (111, 112) verbunden sind, die jeweils mindestens eine Unterlegscheibe (1) aufweist, die darauf angebracht ist, wobei die Unterlegscheiben (1) dafür eingerichtet sind, gegen Rotation in einer Position befestigt zu werden, wo sie mit einer jeweiligen Anschlagsfläche (118) zusammenwirken, um Bewegung des Unterrahmens (103) relativ zum Fahrzeugaufbau (102) in mindestens einer ersten Richtung zu begrenzen.

10. Motorlageranordnung (100) nach Anspruch 9, wobei die Anschlagsflächen (118) in verschiedene Richtungen zeigen, um Bewegung des Unterrahmens (103) relativ zum Fahrzeugaufbau (102) in mindestens zwei verschiedenen Richtungen zu begrenzen.

11. Verfahren zur Befestigung eines Motors (101) an einem Fahrzeugaufbau (22; 32; 52; 72; 102), umfassend folgende Schritte:
Einführen eines Befestigungsmittels (24; 34; 64; 74; 111, 112) durch eine Unterlegscheibe (1), wobei sich die Unterlegscheibe (1) in einer ersten Ebene erstreckt und einen Radius, der von einem Minimumwert zu einem Maximumwert um mindestens einen Teil des Umkreises herum ansteigt, und ein Durchgangsloch (3) zur Aufnahme des Befestigungselements (24; 34; 64; 74; 111, 112) aufweist,
Einführen des Befestigungsmittels (24; 34; 64; 74; 111, 112) durch einen Teil eines Unterrahmens (23; 33; 53; 73; 103), an dem der Motor befestigt ist, und/oder eines Fahrzeugaufbaus (22; 32; 52; 72; 102) zum Verbinden des Unterrahmens (23; 33; 53; 73; 103) mit dem Fahrzeugaufbau (22; 32; 52; 72; 102); und
Drehen der Unterlegscheibe (1) in eine Position, wo die Unterlegscheibe (1) mit einer Anschlagsfläche (28; 38; 58; 78; 118) zusammenwirkt, um Bewegung des Unterrahmens (23; 33; 53; 73; 103) relativ zum Fahrzeugaufbau (22; 32; 52; 72; 102) in einer ersten Richtung parallel zur ersten Ebene der Unterlegscheibe (1) zu begrenzen.

12. Verfahren nach Anspruch 11, wobei die Unterlegscheibe (1) durch Rotation des Befestigungsmittels (24; 34; 64; 74) durch Reibung zwischen dem Befestigungsmittel (24; 34; 64; 74) und der Unterlegscheibe (1) gedreht wird.

13. Verfahren nach Anspruch 11, wobei eine Mutter (113) auf dem Befestigungsmittel (111, 112) angebracht wird, und die Unterlegscheibe (1) durch Rotation der Mutter (113) durch Reibung zwischen der Mutter (113) und der Unterlegscheibe (1) gedreht wird.

## Revendications

1. Ensemble de montage de moteur (20; 30; 50; 70; 100) de fixation d'un moteur (101) sur la carrosserie du véhicule (22; 32; 52; 72; 102), ledit ensemble de montage de moteur (20; 30; 50; 70; 100) comprenant:
- une carrosserie du véhicule (22; 32; 52; 72; 102);
- un faux-châssis (23; 33; 53; 73; 103) auquel ledit moteur (101) est fixé, et
- au moins une attache (24; 34; 64; 74; 111, 112) s'étendant à travers au moins une section dudit faux-châssis (23; 33; 53; 73; 103) et/ou ladite carrosserie du véhicule (22; 32; 52; 72; 102) pour relier ledit faux-châssis (23; 33; 53; 73; 103) et ladite carrosserie du véhicule (22; 32; 52; 72; 102);
**caractérisé en ce que** ledit ensemble de montage du moteur (20; 30; 50; 70; 100) comprend en outre:
au moins une rondelle (1) s'étendant dans un premier plan et ayant un rayon qui augmente d'une valeur minimale à une valeur maximale autour d'au moins une partie de sa périphérie et un trou traversant (3) pour recevoir ladite attache (24; 34; 64; 74; 111, 112), ladite rondelle (1) étant agencée pour être fixée contre rotation sur ladite attache (24; 34; 64; 74; 111, 112) dans une position dans laquelle elle coopère avec une surface de butée (28; 38; 58; 78; 118), pour restreindre le mouvement dudit faux-châssis (23; 33; 53; 73; 103) par rapport à ladite carrosserie du véhicule (22; 32; 52; 72; 102) dans une première direction en parallèle avec le premier plan de la rondelle (1).

2. Ensemble de montage de moteur (20; 30; 50; 70; 100) selon la revendication 1, dans lequel ladite rondelle (1) a la forme d'une spirale, et ledit trou traversant (3) est situé dans le centre de ladite spirale.

3. Ensemble de montage de moteur (20; 30; 50; 70) selon la revendication 1 ou 2, dans lequel ladite rondelle (1) est agencée pour être tournée par la friction entre ladite attache (24; 34; 64; 74) et ladite rondelle (1).

4. Ensemble de montage de moteur (100) selon la revendication 1 ou 2, dans lequel un écrou (113) est monté sur ladite attache (111, 112), et ladite rondelle (1 ) est agencée pour être tourné par la friction entre ledit écrou (113) et ladite rondelle (1).

5. Ensemble de montage de moteur (20; 30; 100) selon l'une quelconque des revendications précédentes, dans lequel ladite surface de butée (28; 38; 118) est située sur ledit faux-châssis (23; 33; 103).

6. Ensemble de montage de moteur (70) selon l'une quelconque des revendications 1 à 4, dans lequel le faux-châssis (73) est situé entre des brides opposées (75, 76) d'une carrosserie du véhicule (72) et ladite surface de butée (78) est située sur ladite carrosserie du véhicule (72).

7. Ensemble de montage de moteur (50) selon l'une quelconque des revendications 1 à 4, dans lequel ladite attache (64) s'étend à travers une bague (51) dans ledit faux-châssis (53), et ladite rondelle (1) est agencée pour coopérer avec une surface de butée (58) située sur une partie statique (55) de ladite bague (51).

8. Ensemble de montage de moteur (20; 100) selon l'une quelconque des revendications précédentes, comprenant au moins un organe de verrouillage (29; 119) agencé pour restreindre le mouvement de ladite rondelle (1) avant que ladite attache (24; 111, 112) ne soit insérée à travers ladite rondelle (1).

9. Ensemble de montage de moteur (100) selon l'une quelconque des revendications précédentes, dans lequel ledit faux-châssis (103) et la carrosserie du véhicule (102) sont reliés par au moins deux attaches (111, 112), dont chacune ayant au moins une rondelle (1) montée là-dessus, lesdites rondelles (1) étant agencées pour être fixées contre rotation dans une position dans laquelle elles coopèrent avec une surface de butée respective (118) pour restreindre le mouvement dudit faux-châssis (103) par rapport audit corps du véhicule (102) dans au moins une première direction.

10. Ensemble de montage de moteur (100) selon la revendication 9, dans lequel lesdites surfaces de butée (118) sont orientées dans des directions différentes pour restreindre le mouvement dudit faux-châssis (103) par rapport à ladite carrosserie du véhicule (102) dans au moins deux directions différentes.

11. Procédé de fixation d'un moteur (101) à une carrosserie du véhicule (22; 32; 52; 72; 102), comprenant les étapes de:
insérer une attache (24; 34; 64; 74; 111, 112) à travers une rondelle (1), ladite rondelle (1) s'étendant dans un premier plan et ayant un rayon qui augmente d'une valeur minimale à une valeur maximale autour d'au moins une partie de sa périphérie et un trou traversant (3) pour recevoir ladite attache (24; 34; 64; 74; 111, 112),
insérer ladite attache (24; 34; 64; 74; 111, 112) à travers une section d'un faux-châssis (23; 33; 53; 73; 103), auquel ledit moteur est fixé, et/ou une carrosserie du véhicule (22; 32; 52; 72; 102), pour relier ledit faux-châssis (23; 33; 53; 73; 103) et une carrosserie du véhicule (22; 32; 52; 72; 102), et tourner ladite rondelle (1) dans une position dans laquelle ladite rondelle (1) coopère avec une surface de butée (28; 38; 58; 78; 118) pour restreindre le mouvement dudit faux-châssis (23; 33; 53; 73; 103) par rapport à ladite carrosserie du véhicule (22; 32; 52; 72; 102) dans une première direction en parallèle avec le premier plan de la rondelle (1).

12. Procédé selon la revendication 11, dans lequel ladite rondelle (1) est tournée par la rotation de ladite attache (24; 34; 64; 74) par la friction entre ladite attache (24; 34; 64; 74) et ladite rondelle (1).

13. Procédé selon la revendication 11, dans lequel un écrou (113) est monté sur ladite attache (111, 112), et ladite rondelle (1) est tournée par rotation dudit écrou (113) par la friction entre ledit écrou (113) et ladite rondelle (1).
